# EUROPEAN PATENT SPECIFICATION

(11) **EP 4 001 727 B1**
(45) Date of publication and mention of the grant of the patent: **12.07.2023**
(21) Application number: 21209187.0
(22) Date of filing: 19.11.2021
(51) Int. Cl.: F16L 55/115, A01B 71/08

(54) **PROTECTIVE CAP FOR CARTRIDGES OF CONNECTORS**
SCHUTZKAPPE FÜR KARTUSCHEN VON STECKVERBINDERN
CAPUCHON DE PROTECTION POUR CARTOUCHES DE CONNECTEURS

(30) Priority: 20.11.2020 IT 202000027894
(43) Date of publication of application: 25.05.2022
(73) Proprietor: FASTER S.r.l., 26027 Rivolta d'Adda (IT)
(72) Inventor: NERI, Marco, 26027 RIVOLTA D'ADDA (IT); FERRARA, Rocco, 26027 RIVOLTA D'ADDA (IT); CANZI, Luigi, 20066 MELZO (IT)
(74) Representative: Pizzoli, Antonio Mario

(56) References cited:
- DE-A1-102019 205 141
- IT-A1- MI20 120 058
- US-A- 2 145 212

## Description

### TECHNICAL FIELD

The present invention belongs to the field of connectors and/or fittings for hydrodynamic applications. In particular, the present invention finds application preferably but not exclusively in the case of female cartridges of connectors and/or fittings for hydrodynamic applications. In detail, the present invention relates to a protective cap for cartridges of the aforementioned type, said cap being adapted to prevent the infiltration of dirt or impurities inside said cartridge.

### BACKGROUND ART

Quick connectors for reciprocally connecting hydraulic circuits by means of flexible pipes are known from the prior art, e.g. IT M12012000058 A1 and DE 102019205141 A1. For example, male- and female-type quick connectors are known and widely used in the agricultural field for the mutual connection of the hydraulic circuits of a main tractor and an implement, respectively. In particular, among the most widely used couplings in the agricultural field, those of the "push-pull" type are particularly appreciated, wherein the connection and disconnection of the female couplings (usually applied to the tractor) and male couplings (usually applied to the flexible pipes of the implement) are obtained through pushing (for connecting) and pulling (for disconnecting) actions, respectively. Furthermore, the female and male couplings of the quick connectors are shaped so that the mechanical connection (e.g. by pushing, usually on the male coupling, in the case of the push-pull connectors) of the female and male couplings results in the automatic positioning of the respective valve assemblies in the opening position (and thus in the hydraulic connection, whereby the fluid flow, generally hydraulic oil, between the two female and male couplings is possible), while the disconnection (by pulling, usually on the male coupling, in the case of push-pull connectors) of the female and male couplings results in the automatic repositioning of the female and male valve assemblies in the respective closing positions (in which the hydraulic circuits are closed and separate and the fluid flow between the two female and male couplings is not possible).

Furthermore, in the most common applications, the female couplings are, as mentioned before, fixed to the main operating machine (the tractor, in the case of agricultural applications) to define the end part of the hydraulic circuit of the operating machine or tractor, while the male couplings are connected to the flexible pipes of the application or implement to be moved, to define the end part of said flexible pipes.

In particular, solutions are known in which several female cartridges are each housed in a housing seat defined by a main block, this being the reason why, in this case, the couplings are also known as "cartridges".

The need or at least an opportunity is known among operators to protect the couplings, of both the female-type and the male-type, when not in use, and thus when not engaged by a male-type and a female-type coupling, respectively. Said need arises, in particular, from the concrete and repeatedly confirmed problems resulting from the accidental infiltration of dirt, impurities and/or debris, in particular sand, soil, solid particles, and similar debris, wherein such problems not infrequently comprise the locking of the movable parts of the coupling, and thus the loss of the functionalities of the coupling itself.

In particular, the practical experience has shown that dirt and/or debris deposited on the coupling when it is at rest (coupling not connected) can actually be pushed into the cavity during the hydraulic connection of the coupling, with the non-negligible risk of improper operations (imperfect closure with fluid leakages) or even of the coupling being taken out of use due to the presence of dirt and/or debris and/or impurities, and thus of needing to resort to expensive extraordinary maintenance operations (in particular cleaning), if not even to the replacement of the coupling.

In order to overcome or at least limit the above problems, protective caps adapted to prevent or at least limit the infiltration of debris into the couplings have been developed, suggested, and used.

The protective caps of known types, however, are affected by problems and disadvantages that the Applicant of present application intends to overcome or at least reduce by means of the present invention.

Among the known solutions, widely used are those providing the protection of the couplings by means of movable flaps, which often are rotatable and switchable between a first position, in which they prevent accessing the coupling (thus also preventing the mechanical and hydraulic connection) and a second position in which, on the contrary, they allow accessing the coupling (thus also allowing the mechanical and hydraulic connection), as in IT MI2012000058 A1 and DE 102019205141 A1.

In particular, in order to perform the connection operations, the protective caps of a first type according to the prior art require the manual switching (by an operator) of the flap from the closing position to the opening position, wherein on the contrary, the caps of this type provide that the flap automatically switches (usually by virtue of the action of a spring) from the opening position when no longer subjected to the manual action of the operator. Obviously, the protective caps of this first type according to the prior art complicate the hydraulic connection operations because the operator is forced to manually hold the flap in the opening position, wherein the operator is thus forced to use only one hand for the actual connection operations, in particular, to push on the coupling, e.g. if the operator must connect a male coupling of an implement to a female coupling of a tractor.

Conversely, the protective caps with movable flap according to IT MI2012000058 A1 and DE 102019205141 A1 and of a second type require an operator to act manually on the flap both to switch it from the closing position to the opening position and to switch it from the opening position to the closing position. Obviously, in the case of protective caps of this second type, the operator has both hands free for the actual connection operations because the flap, once switched to the opening position, remains in said opening position. However, the protective caps of this second type imply the risk that once the coupling has been disconnected, the operator forgets to switch the flap from the opening position to the closing position. Furthermore, it is worth noting that the caps with movable flap according to the prior art, whether of the first type or the second type, are subject to wear and progressive loss of functionality. For example, in protective caps of the first type, the loss of functionality most often is the progressive loss of the function of automatic switching from the opening to the closing position.

Furthermore, the caps according to the prior art with switchable flap have the further problem of the progressive loss of tightness between the flap and the fixed part, thus with the risk of infiltrations even with the flap in the closing position.

Finally, protective caps are known which comprise a flexible membrane, which defines a cross-shaped opening, wherein the membrane is elastically deformed from the closing shape to the opening shape during the connection operations to then return to the original closing shape after the coupling is disconnected. However, the caps of this type imply the problem of the progressive loss of elasticity by the membrane, exposed to even very adverse weathering, wherein the loss of flexibility leads in some cases to the rupture of the membrane itself or, in any case, to the fact that the membrane tends not to resume the closing shape.

US 2145212 discloses a safety closure of a tank with elastic means which are suitable to rotate automatically a protective cap from a closing position to an opening position when a bolt locking the a cap in the closing position is manually released.

### DESCRIPTION OF THE PRESENT INVENTION

Therefore, it is the main object of the present invention to provide a solution which allows an adequate protection of the couplings, in particular but not exclusively of female and male couplings of the "push-pull" type, and which allows overcoming or at least minimizing the problems and disadvantages affecting the solutions according to the prior art aimed at avoiding or at least reducing the risk of infiltration of dirt and/or general impurities.

In particular, it is an object of the present invention to provide a solution of the aforesaid type which, while providing an adequate protection of the coupling, does not complicate the hydraulic connection operations, a further object of the present invention being, on the contrary, to provide a protection of the aforesaid type which allows the hydraulic connection of the coupling substantially according to the same connection methods which are implementable in the absence of said protection.

It is a further object of the present invention to provide a protection of the aforesaid type which is applicable to couplings of different type and size without requiring modifications of either the protection or the couplings, which is characterized by low cost, as well as manufacturable and installable through simple and fast operations, and thus at low cost.

In view of both the aforesaid objects and the increasingly perceived need to protect adequately couplings of different types, the present invention relates to a protective cap according to claim 1, wherein further embodiments of the protective cap according to the present invention are defined by the dependent claims.

According to a described embodiment, a protective cap for female- or male-type hydraulic cartridges comprises a flange adapted to be arranged in a fixed position with respect to one said female-type or male-type cartridge, where said flange defines an opening to allow, in said fixed position, the engagement of said female-type or male-type cartridge by a male-type or a female-type cartridge, respectively, wherein said cap comprises a plug which is switchable with respect to said flange between a first closing position, in which said opening is obstructed by said plug, and a second opening position, in which said opening is not obstructed by said plug; wherein the switching of said plug from said first closing position to said second opening position results in said plug being automatically locked in said second opening position, and wherein the unlocking of said plug results in said plug being automatically switched from said second opening position to said first closing position.

According to a described embodiment, said plug is switchable by rotation between said first closing position and second opening position with respect to a predetermined rotation axis.

According to a described embodiment, said protective cap comprises first elastic means, wherein the switching by rotation of said plug from said first closing position to said second opening position occurs against the elastic resistance of said first elastic means, and wherein the automatic switching by rotation of said plug from said second opening position to said first closing position is due to the elastic bias generated by said first elastic means.

According to a described embodiment, said first elastic means comprise a first helical spring, wherein the switching by rotation of said plug from said first closing position to said second opening position thus occurs against the torsional elastic resistance of said first helical spring, and wherein the automatic switching by rotation of said plug from said second opening position to said first closing position is due to the torsional elastic bias generated by said first helical spring.

According to a described embodiment, said cap comprises a first engaging and locking element rotationally constrained to said flange, wherein said plug is switchable by rotation with respect to said first engaging and locking element, where said first engaging and locking element is switchable by translation along a direction substantially parallel to said rotation axis of said plug between a first position and a second position, and wherein the switching by rotation of said plug from said first closing position to said second opening position results in said first engaging and locking element being automatically switched from said first position to said second position, and in said plug being automatically locked in said second opening position.

According to a described embodiment, with said plug in said second opening position, the pressing action, e.g., a manual pressing action, on said first engaging and locking element results in said first engaging and locking element being switched from said second position to said first position and in said plug being unlocked and thus in said plug being automatically switched from said second opening position to said first closing position.

According to a described embodiment, said protective cap comprises second elastic means, wherein the switching by rotation of said plug from said first closing position to said second opening position results in said first engaging and locking element being automatically switched from said first position to said second position against the elastic resistance of said second elastic means.

According to a described embodiment, said second elastic means comprise a second helical spring.

According to a described embodiment, said first engaging and locking element comprises a bushing and an insert mutually constrained so that said bushing and said insert are neither rotatable nor translatable with respect to each other, and wherein said insert is at least partially housed in a first housing seat of said flange, and wherein said first engaging and locking element is rotationally constrained to said flange by mutual shape and size fitting of said insert and said housing seat. According to a described embodiment, said insert is shaped so as to define a second housing seat, wherein said bushing is at least partially housed in said second housing seat, and wherein said bushing and said insert are mutually rotationally constrained by mutual shape and size fitting of the portion of said bushing housed in said second engaging seat and said second engaging seat.

According to a described embodiment, said bushing extends through said second engaging seat, wherein said bushing and said insert are mutually translationally constrained by means of an elastic ring which engages the portion of said bushing protruding from said insert.

According to a described embodiment, said bushing has a hollow tubular shape, wherein said protective cap comprises a fixing screw housed inside said bushing and by means of which said first engaging element can be fixed in a predetermined position.

According to a described embodiment, said cap comprises a hollow tubular portion in which said first engaging and locking element is housed.

According to a described embodiment, said cap comprises a seal housed in a corresponding seat defined by said flange.

According to a described embodiment, with said plug in said first closing position, a first substantially flat surface of said cap is at least partially superimposed on a second substantially flat surface of said flange according to a viewing direction substantially parallel to said rotation axis.

### BRIEF DESCRIPTION OF THE DRAWINGS

Hereinafter, the present invention will be explained by means of the following detailed description of the embodiments depicted in the drawings. However, the present invention is not limited to the embodiments described below and depicted in the drawings.

In the drawings:
- figure 1 shows an exploded view of a protective cap according to an embodiment;
- figures 2 and 3 each show a perspective view of a protective cap according to an embodiment;
- figure 4 shows a lower (bottom) perspective view of a detail of the cap or flap of a protective cap according to an embodiment;
- figure 5 shows an upper (top) perspective view of a detail of a flange of a cap according to an embodiment;
- figure 6 shows an exploded view of a bushing of a protective cap according to an embodiment;
- figure 7 shows a perspective view of a spring of a protective cap according to an embodiment.

### DETAILED DESCRIPTION OF THE PRESENT INVENTION

The present invention is particularly advantageously applied when used for the protection of female hydraulic cartridges, this being the reason why the present invention will be described below with possible particular reference to female hydraulic cartridges.

However, the possible applications of the present invention are not limited to female hydraulic cartridges only, the present invention being instead applicable to hydraulic couplings of any type, both male- and female-type.

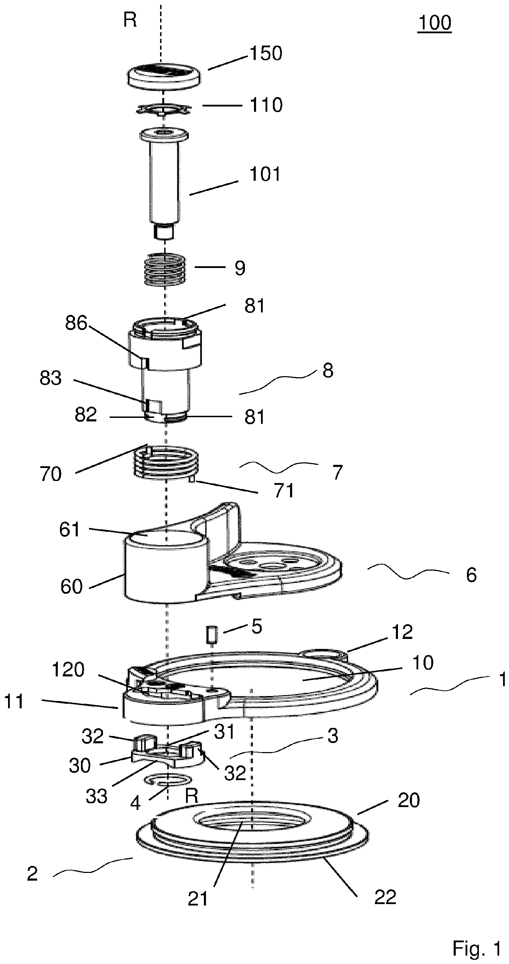

Figure 1 shows a cap 100, a flange 1, a seal 2, an insert 3, an elastic ring 4, a retaining pin 5, a plug or flap 6, a first helical spring 7, a bushing 8, a second spring 9, a screw 101, a spring washer 110, and a button or cover 150.

The flange 1 is annular in shape to define a through opening 10, the flange 1 being thus intended to be arranged in a fixed position with respect to a coupling (not depicted) so that the opening 10 allows accessing the coupling, in particular allows the connection of the (female or male) coupling by a (female or male, respectively) coupling intended to be introduced through the opening 10. In order to be arranged in the aforesaid fixed position, the flange 1 comprises a seat 12 adapted to be engaged by a screw (not depicted) according to substantially known methods thus not described in detail for brevity.

The seal 2 comprises two concentric portions, the inner portion 20 defining an opening 21, wherein the inner portion 20 is intended to be housed in the opening 10 of the flange 1, the outer portion 22 being intended to be placed abutting against the lower face (concealed in figure 1) of the annular portion of the flange 1.

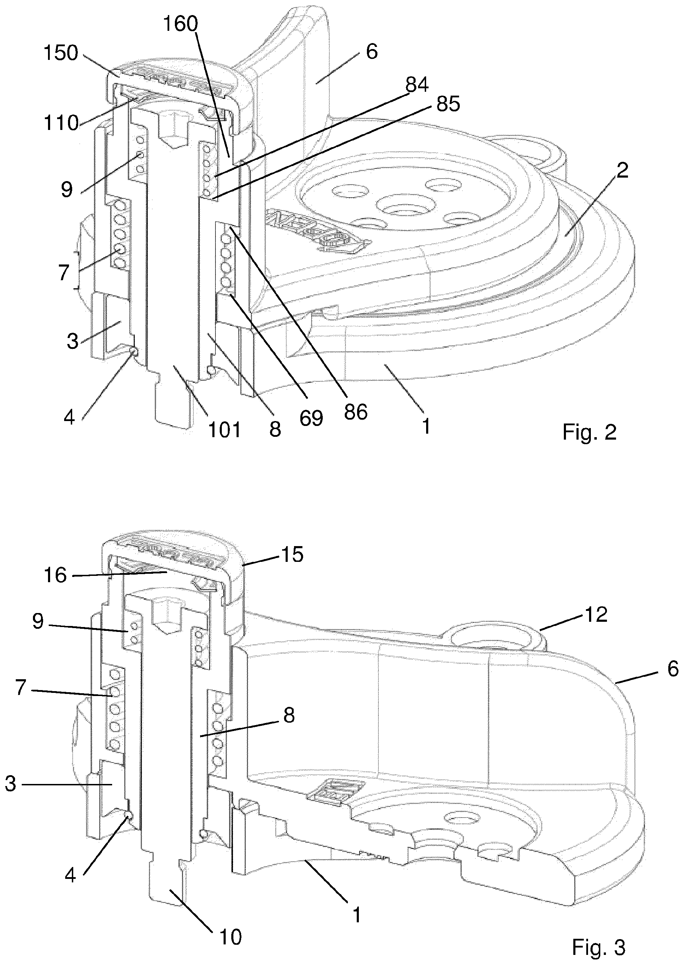

The plug or flap 6 is fixed to the flange 1 and switchable with respect to the flange 1 (according to methods explained below) between a closing position (figure 2), in which it obstructs the openings 21 and 10 of the seal 2 and the flange 1, respectively, thus preventing access to the coupling, and an opening position (figure 3), in which, on the contrary, it does not obstruct the openings 21 and 10 and allows access to the coupling. Furthermore, with the plug 6 in the closing position, the lower face (concealed in figure 1 and partially depicted in figure 2) of the plug 6 is placed abutting against the inner portion 20 of the seal 2 so as to apply a slight pressure to the seal 2, thus avoiding infiltration of dirt and/or debris through the openings 21 and 10.

The switchability by rotation (about the axis R-R) of the plug 6 with respect to the flange 1 is obtained by means of a hollow tubular portion 60, which defines an inner space 61 in which part of the bushing 8, the spring 7, part of the spring 9, and part of the screw 101 are housed, wherein the bushing 8 is also hollow and defines an inner space 81 in which the spring 9 and part of the screw 101 are housed. Furthermore, the screw 101, with the cap fully assembled and arranged in a fixed position with respect to the coupling (see the description below) extends through the bushing 8 and the insert 3 up to protrude from the flange 1, the end part of the screw 101 which protrudes from the flange 1 being intended to engage a fixed support, e.g., the same support or lock (not depicted) in which the coupling is housed. However, it is worth noting that, during the rotation of the plug from the closing position to the opening position, and vice versa from the opening position to the closing position, neither the bushing 8, the insert 3 nor obviously the screw 101 is fed into rotation by the plug 6, where the switching by rotation of the plug 6 thus occurs with respect to the flange 1 only.

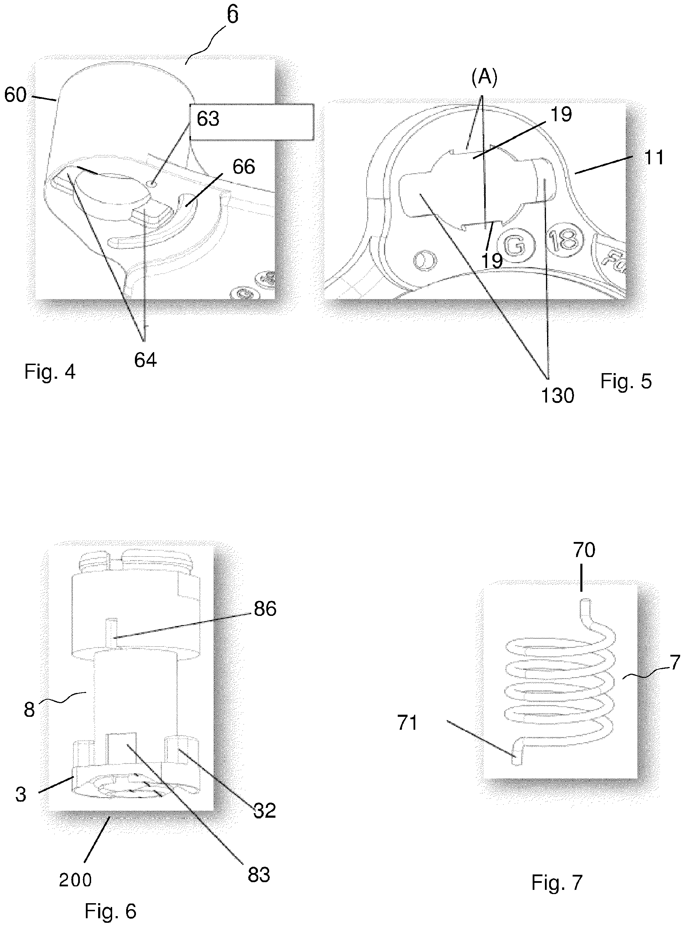

Indeed, the bushing 8 and the insert 3 are mutually rotationally and translationally integral, meaning that the bushing 8 and the insert 3 cannot be translated with respect to each other parallel to the axis R-R, nor can they be rotated with respect to each other about the axis R-R. To this end, as depicted, the insert 3 comprises a portion 30 defining a through opening 31 confined internally by two flat and mutually opposite and parallel surfaces connected by two curved (with the concavity facing inward from the opening 31) and mutually opposite surfaces. The bushing 8, on the other hand, comprises a first end portion 80 which extends through the opening 31, wherein the free end part 81 of the bushing 80 protrudes partially outwards from the insert 3. Said protruding end part 81 comprises a peripheral groove 82 engaged by the elastic ring 4, wherein since the outer size of the ring 4 is such that the ring 4 is not able to pass through the opening 31 of the insert 3, the insert 3 and the bushing 8 are translationally constrained by means of the ring 4. Furthermore, the end portion 80 of the bushing 8 comprises two flat, diametrically opposite surfaces 83 (only one to be seen in figure 1) which, with the cap 100 assembled, are placed abutting against the two flat, opposite surfaces, respectively, which confine or internally delimit the opening 31 of the insert 3, the bushing 8 and the insert 3 thus also being mutually rotationally constrained. Considering the above explanation, as well as in light of the following description, the assembly consisting of the bushing 8 and the insert 3, and possibly also comprising the elastic ring 4, will possibly be referred to as the first engaging and locking element 200 (figure 6).

Furthermore, the flange 1 comprises an engaging portion 11 which defines a through opening 120 shaped so as to accommodate the insert 3 by rotationally constraining it by contrast of shape and size. Indeed, the opening 120 (figure 5) comprises two diametrically opposite portions 130 each intended to house one of two opposite teeth 32 of the insert 3, wherein said opposite teeth 32 extend from the portion 30 of the insert 3, said portion 30 being externally confined (delimited) by two flat, opposite, and parallel surfaces 33 which, with the insert 3 housed in the opening 120, are each placed abutting against one of two opposite, flat and parallel surfaces 19 (referred to as bushing biasing surfaces), which internally delimit the seat 120, the engaging and locking element 200, and the flange 1, thus being mutually rotationally constrained.

Furthermore, the portion 60 of the plug 6 further comprises two diametrically opposite engaging seats 64 each intended to be alternately engaged and disengaged by one of the two opposing teeth 32 of the insert 3.

As depicted, the inner space 81 of the bushing 8 is confined by two concentric cylindrical surfaces, one of which has an inner diameter substantially corresponding to the diameter of the screw 101, while the other has a larger diameter to define a gap 84 in which the spring 9 is housed, wherein the two concentric portions are connected by a first shoulder 85 with a circular crown shape in plan (according to a view from a direction parallel to the axis R-R, and thus from the top in figure 1). The spring 9 housed in the gap 84 is subjected to pressure by contrast between the shoulder 85 and a second opposite shoulder 160 defined by the screw 101 and having a shape similar to that of the shoulder 85, wherein thus the spring 9 applies an elastic bias (downward with respect to figures 2 and 3) against the bushing 8 (and thus against the element 200). The bushing 8 further defines a seat 86 which extends inwards from the outer surface thereof and is intended to be engaged by a first end hook 70 of the spring 7. Instead, the second end hook 71 of the spring 7 is engaged in a seat 63 of the plug 6 arranged within the hollow portion 60. The bushing 8 further defines a third outer shoulder 86 similar to the shoulders 85 and 84, the third shoulder 86 being arranged substantially in front of a fourth shoulder 69 defined by the plug 6, wherein said fourth shoulder 69 extends from the inner surface of the portion 60 of plug 6 towards the interior 61 of said hollow portion 60. Therefore, the fourth shoulder 69 contributes to defining a further second gap 64 between the hollow portion 60 and the bushing 8 in which the spring 7 is housed, one end 70 of which is constrained, as mentioned above, to the bushing 8 while the opposite end 71 is constrained to the plug 6.

The operation of the cap 100 can be summarized as follows.

With the cap or flap 6 in the closing position (figure 2), the plug 6 is pushed against the flange 1 and the element 200 (comprising bushing 8 and insert 3) is pushed (downwards with reference to figures 2 and 3) by the spring 9. In this closing position, the plug 6 is positioned above the insert 3, wherein the teeth (or projections) 32 of the insert 3 thus do not engage the respective seats 64 of the plug 6; in particular, with the plug 6 in the closing position, the mutual position of the seats 64 of the plug 6 and the teeth 32 of the insert 3 is that in figure 4.

When switching the plug 6 to the opening position, the spring 7 is loaded and subjected to elastic torsion, wherein with the cap in the opening position the seats 64 of the plug 6 are located at the teeth 32 (superimposed on the teeth 32 according to a view from a direction parallel to the R-R axis). At this point, the spring 7, subjected to compression by contrast between the shoulders 86 and 69 expands, overcoming the elastic resistance of the spring 9, thus translating the element 200 upwards, with the result that the teeth 32 of the insert 3 engage the seats 64 of the plug 6. With the seats 64 engaged by the teeth 32, the plug 6 is locked in the opening position.

Furthermore, it must be considered that a retaining pin 5 protruding from the flange 1 permanently engages a seat 66 with semicircular development of the plug 6, wherein the pin 5 and the seat 66 define the opposite stroke end positions of the plug 6 preventing the plug 6 from being switched by rotation beyond the opening and/or closing position.

With plug 6 locked in the opening position, an operator is free to access the coupling, in particular to use both hands for engaging the coupling, with obvious advantages if the coupling protected by the cap and a second coupling are connectable according to push-pull modes.

The automatic switching of the plug 6 to the closing position is obtained by pressing (e.g. manually with a finger) on the button or cover 150 which engages a further fifth external shoulder 88 of the bushing 8, wherein the pressure on the button 150 results in the downward translation (opposed by the spring 7 but promoted by the spring 9) of the element 200 and thus of bushing 8 and insert 3, with consequent mutual disengagement of the teeth 32 and the respective seats 64. With the teeth 32 released from the seats 64, and thus with the plug 6 no longer locked in the opening position, the plug 6 is automatically switched by rotation to the closing position by virtue of the torsional thrust applied by the spring 7.

Therefore, by means of the previous detailed description of the embodiments of the present invention depicted in the drawings, it has been shown that the present invention allows achieving the preset objects by overcoming the drawbacks affecting the prior art.

In particular, the present invention provides a solution which:
allows adequate protection of couplings of any type, avoiding or at least reducing the risk of infiltration of dirt and/or general impurities in said couplings;
while offering an adequate protection of the coupling, it does not complicate the hydraulic connection operations;
on the contrary, it allows the couplings to hydraulically connected substantially according to the same connection methods which are implementable in the absence of protection;
is applicable to couplings of different type and size without requiring modifications to either the protection or the couplings;
is characterized by low costs, and in manufacturable and installable by means of simple and fast operations.

Although the present invention was explained above by means of a detailed description of the embodiments depicted in the drawings, the present invention is not limited to the embodiments described above and depicted in the drawings.

For example, the cap according to the present invention can be made using a wide selection of materials, both metal and plastic.

Finally, it should be appreciated that the protective cap according to the present invention is practically applicable to couplings of all type and size, in particular to flat-faced and non-flat-faced male and female couplings, e.g. ISO 7241 and/or ISO 16028 type couplings.

The scope of the present invention is thus defined by the claims.

## Claims

1. A protective cap (100) for female- or male-type hydraulic cartridges adapted to be engaged by male- and female-type cartridges, respectively, wherein the mutual engagement of a female-type cartridge and a male-type cartridge results in the possible flow of hydraulic fluid between said female and male cartridges, wherein said protective cap (100) comprises a flange (1) adapted to be arranged in a fixed position with respect to said female- or male-type cartridge, wherein said flange (1) defines an opening (10) so as to allow, in said fixed position, the engagement of said female-type or male-type cartridge by a male-type or female-type cartridge, respectively, wherein said cap (100) comprises a plug (6) which is switchable with respect to said flange (1) between a first closing position, in which said opening (10) is obstructed by said plug (6), and a second opening position, in which said opening (10) is not obstructed by said plug (6), wherein said plug (6) is adapted to be switched by rotation between said first closing position and second opening position with respect to a predetermined rotation axis (R-R), **characterized in that** the switching of said plug (6) from said first closing position to said second opening position results in the automatic locking of said plug (6) in said second opening position, **in that** the unlocking of said plug (6) results in the automatic switching of said plug (6) from said second opening position to said first closing position, **in that** said protective cap (100) comprises first elastic means (7), **in that** switching by rotation of said plug (6) from said first closing position to said second opening position occurs against the elastic resistance of said first elastic means (7), **in that** the automatic switching by rotation of said plug (6) from said second opening position to said first closing position is due to the elastic thrust generated by said first elastic means (7), **in that** the protective cap (100) comprises a first engaging and locking element (200) which is rotationally constrained to said flange (1), **in that** said plug (6) is adapted to be switched by rotation with respect to said first engaging and locking element (200), **in that** said first engaging and locking element (200) is adapted to be switched by translation along a direction substantially parallel to said rotation axis (R-R) of said plug (6) between a first position and a second position of the first engaging and locking element (200), **and in that** the switching by rotation of said plug (6) from said first closing position to said second opening position of the plug (6) results in said first engaging and locking element (200) being automatically switched from said first position to said second position of the first engaging and locking element (200), said plug (6) being automatically locked in said second opening position of the plug (6).

2. A protective cap (100) according to claim 1, **characterized in that** said first elastic means (7) comprise a first helical spring, then **in that** the switching by rotation of said plug (6) from said first closing position to said second opening position of the plug (6) occurs against the torsional elastic resistance of said first helical spring (7), **and in that** the automatic switching by rotation of said plug (6) from said second opening position to said first closing position of the plug (6) is due to the torsional elastic thrust generated by said first helical spring (7).

3. A protective cap (100) according to claim 2, **characterized in that** with said plug (6) in said second opening position, a pressing action, e.g. a manual pressing action, on said first engaging and locking element (200) results in said first engaging and locking element (200) being switched from said second position to said first position of the engaging and locking element (200) and in said plug (6) being unlocked and then in said plug (6) being automatically switched by rotation from said second opening position to said first closing position of the plug (6).

4. A protective cap (100) according to one of the claims 1 to 3, **characterized in that** said protective cap (100) comprises second elastic means (9), **and in that** the switching by rotation of said plug (6) from said first closing position to said second opening position of the plug (6) results in said first engaging and locking element (200) being automatically switched from said first position to said second position of the first engaging and locking element (200) against the elastic resistance of said second elastic means (9).

5. A protective cap (100) according to claim 4, **characterized in that** said second elastic means (9) comprise a second helical spring (9).

6. A protective cap (100) according to one of claims 1 to 5, **characterized in that** said first engaging and locking element (200) comprises a bushing (8) and an insert (3) mutually constrained so that said bushing (8) and said insert (3) are neither rotatable nor translatable with respect to each other, **in that** said insert (3) is at least partially housed in a first housing seat (120) of said flange (1), **and in that** said first engaging and locking element (200) is rotationally constrained to said flange (1) by mutual shape and size fitting of said insert (3) and said housing seat (120).

7. A protective cap (100) according to claim 6, **characterized in that** said insert (3) is shaped so as to define a second housing seat (31), **in that** said bushing (8) is at least partially housed in said second housing seat (31), and **in that** said bushing (8) and said insert (3) are mutually rotationally constrained by mutual shape and size fitting of the portion of said bushing (8) housed in said second engagement seat (31) and said second engagement seat (31).

8. A protective cap (100) according to claim 7, **characterized in that** said bushing (8) extends through said second engagement seat (31), **and in that** said bushing (8) and said insert (3) are mutually translationally constrained by means of an elastic ring (4) which engages the portion of said bushing (8) protruding from said insert (3).

9. A protective cap (100) according to one of the claims from 6 to 8, **characterized in that** said bushing (8) has a hollow tubular shape, **and in that** said protective cap (100) comprises a fixing screw (10) housed inside said bushing (8) and by means of which said first engaging element (200) can be fixed in a predefined position.

10. A protective cap (100) according to one of the claims from 1 to 9, **characterized in that** said plug (6) comprises a hollow tubular portion (60) in which said first engaging and locking element (200) is housed.

11. A protective cap (100) according to one of the claims from 1 to 10, **characterized in that** it comprises a seal (2) housed in a corresponding seat defined by said flange (1).

12. A protective cap (100) according to one of the claims from 1 to 11, **characterized in that** with said plug (6) in said first closing position, a first substantially flat surface of said cap is at least partially superimposed on a second substantially flat surface of said flange (1) according to a viewing direction substantially parallel to said rotation axis (R-R).

## Patentansprüche

1. Schutzkappe (100) für weibliche oder männliche Hydraulikkartuschen, die so angepasst sind, dass sie mit männlichen bzw. weiblichen Kartuschen in Eingriff gebracht werden können, wobei der gegenseitige Eingriff einer weiblichen Kartusche und einer männlichen Kartusche zu der möglichen Strömung von Hydraulikfluid zwischen den weiblichen und männlichen Kartuschen führt, wobei die Schutzkappe (100) einen Flansch (1) aufweist, der so angepasst ist, dass er in einer festen Position in Bezug auf die weibliche oder männliche Kartusche angeordnet werden kann, wobei der Flansch (1) eine Öffnung (10) definiert, um in der festen Position den Eingriff der Patrone des weiblichen Typs bzw. des männlichen Typs durch eine Patrone des männlichen Typs bzw. des weiblichen Typs zu ermöglichen, wobei die Kappe (100) einen Stopfen (6) aufweist, der in Bezug auf den Flansch (1) zwischen einer ersten Schließposition, in der die Öffnung (10) durch den Stopfen (6) verschlossen ist, und einer zweiten Öffnungsposition, in der die Öffnung (10) nicht durch den Stopfen (6) verschlossen ist, schaltbar ist, wobei der Stopfen (6) angepasst ist, durch Drehung zwischen der ersten Schließposition und der zweiten Öffnungsposition in Bezug auf eine vorbestimmte Drehachse (R-R) umgeschaltet zu werden, **dadurch gekennzeichnet, dass** das Umschalten des Stopfens (6) von der ersten Schließposition in die zweite Öffnungsposition zur automatischen Verriegelung des Stopfens (6) in der zweiten Öffnungsposition führt, dass das Entriegeln des Stopfens (6) zum automatischen Umschalten des Stopfens (6) von der zweiten Öffnungsposition in die erste Schließposition führt, dass die Schutzkappe (100) erste elastische Mittel (7) aufweist, dass die Umschaltung durch Drehung des Stopfens (6) aus der ersten Schließposition in die zweite Öffnungsposition gegen den elastischen Widerstand der ersten elastischen Mittel (7) erfolgt, dass die automatische Umschaltung durch Drehung des Stopfens (6) aus der zweiten Öffnungsposition in die erste Schließposition durch den von den ersten elastischen Mittel (7) erzeugten elastischen Schub erfolgt, dass die Schutzkappe (100) ein erstes Eingriffs- und Verriegelungselement (200) aufweist, das drehfest mit dem Flansch (1 ) verbunden ist, dass der Stopfen (6) angepasst ist, durch Drehung in Bezug auf das erste Eingriffs- und Verriegelungselement (200) geschaltet zu werden, dass das erste Eingriffs- und Verriegelungselement (200) angepasst ist, durch Translation entlang einer Richtung im Wesentlichen parallel zu der Drehachse (R-R) des Stopfens (6) zwischen einer ersten Position und einer zweiten Position des ersten Eingriffs- und Verriegelungselements (200) umgeschaltet zu werden, und dass das Umschalten durch Drehen des Stopfens (6) von der ersten Schließposition in die zweite Öffnungsposition des Stopfens (6) dazu führt, dass das erste Eingriffs- und Verriegelungselement (200) automatisch von der ersten Position in die zweite Position des ersten Eingriffs- und Verriegelungselements (200) umgeschaltet wird, wobei der Stopfen (6) automatisch in der zweiten Öffnungsposition des Stopfens (6) verriegelt wird.

2. Schutzkappe (100) nach Anspruch 1, **dadurch gekennzeichnet, dass** die ersten elastischen Mittel (7) eine erste Schraubenfeder aufweisen, dass das Umschalten durch Drehen des Stopfens (6) von der ersten Schließposition in die zweite Öffnungsposition des Stopfens (6) gegen den drehelastischen Widerstand der ersten Schraubenfeder (7) erfolgt, und dass das automatische Umschalten durch Drehen des Stopfens (6) von der zweiten Öffnungsposition in die erste Schließposition des Stopfens (6) auf den drehelastischen Schub zurückzuführen ist, der von der ersten Schraubenfeder (7) erzeugt wird.

3. Schutzkappe (100) nach Anspruch 2, **dadurch gekennzeichnet, dass**, wenn sich der Stopfen (6) in der zweiten Öffnungsposition befindet, ein Druckvorgang, z.B. ein manueller Druckvorgang, auf das erste Eingriffs- und Verriegelungselement (200) dazu führt, dass das erste Eingriffs- und Verriegelungselement (200) von der zweiten Position in die erste Position des Eingriffs- und Verriegelungselements (200) umgeschaltet wird und der Stopfen (6) entriegelt wird und dann der Stopfen (6) durch Drehung automatisch von der zweiten Öffnungsposition in die erste Schließposition des Stopfens (6) umgeschaltet wird.

4. Schutzkappe (100) nach einem der Ansprüche 1 bis 3, **dadurch gekennzeichnet, dass** die Schutzkappe (100) ein zweites elastisches Mittel (9) aufweist, und dass das Umschalten durch Drehen des Stopfens (6) von der ersten Schließposition in die zweite Öffnungsposition des Stopfens (6) dazu führt, dass das erste Eingriffs- und Verriegelungselement (200) gegen den elastischen Widerstand der zweiten elastischen Mittel (9) automatisch von der ersten Position in die zweite Position des ersten Eingriffs- und Verriegelungselements (200) geschaltet wird.

5. Schutzkappe (100) nach Anspruch 4, **dadurch gekennzeichnet, dass** die zweiten elastischen Mittel (9) eine zweite Schraubenfeder (9) aufweisen.

6. Schutzkappe (100) nach einem der Ansprüche 1 bis 5, **dadurch gekennzeichnet, dass** das erste Eingriffs- und Verriegelungselement (200) eine Buchse (8) und einen Einsatz (3) aufweist, die gegenseitig so eingespannt sind, dass die Buchse (8) und der Einsatz (3) relativ zueinander weder drehbar noch verschiebbar sind, dass der Einsatz (3) zumindest teilweise in einem ersten Gehäusesitz (120) des Flansches (1) untergebracht ist, und dass das erste Eingriffs- und Verriegelungselement (200) durch gegenseitige Form- und Größenanpassung des Einsatzes (3) und des Gehäusesitzes (120) drehbar an den Flansch (1) gezwungen ist.

7. Schutzkappe (100) nach Anspruch 6, **dadurch gekennzeichnet, dass** der Einsatz (3) so geformt ist, dass er einen zweiten Gehäusesitz (31) definiert, dass die Buchse (8) zumindest teilweise in dem zweiten Gehäusesitz (31) untergebracht ist, und dass die Buchse (8) und der Einsatz (3) durch gegenseitige Form- und Größenanpassung des in dem zweiten Eingriffssitz (31) untergebrachten Abschnitts der Buchse (8) und des zweiten Eingriffssitzes (31) gegenseitig in ihrer Drehung eingeschränkt sind.

8. Schutzkappe (100) nach Anspruch 7, **dadurch gekennzeichnet, dass** sich die Buchse (8) durch den zweiten Eingriffssitz (31) hindurch erstreckt und dass die Buchse (8) und der Einsatz (3) mittels eines elastischen Rings (4), der mit dem aus dem Einsatz (3) herausragenden Teil der Buchse (8) in Eingriff steht, gegeneinander verschiebungsgesichert sind.

9. Schutzkappe (100) nach einem der Ansprüche 6 bis 8, **dadurch gekennzeichnet, dass** die Buchse (8) eine hohle, rohrförmige Form aufweist, und dass die Schutzkappe (100) eine Befestigungsschraube (10) aufweist, die innerhalb der Buchse (8) untergebracht ist und mittels der das erste Eingriffselement (200) in einer vordefinierten Position fixiert werden kann.

10. Schutzkappe (100) nach einem der Ansprüche 1 bis 9, **dadurch gekennzeichnet, dass** der Stopfen (6) einen hohlen rohrförmigen Abschnitt (60) aufweist, in dem das erste Eingriffs- und Verriegelungselement (200) untergebracht ist.

11. Schutzkappe (100) nach einem der Ansprüche 1 bis 10, **dadurch gekennzeichnet, dass** sie eine Dichtung (2) aufweist, die in einem entsprechenden, durch den Flansch (1) definierten Sitz aufgenommen ist.

12. Schutzkappe (100) nach einem der Ansprüche 1 bis 11, **dadurch gekennzeichnet, dass** bei in der ersten Schließstellung befindlichem Stopfen (6) eine erste im Wesentlichen ebene Fläche der Kappe eine zweite im Wesentlichen ebene Fläche des Flansches (1) in einer zur Drehachse (R-R) im Wesentlichen parallelen Blickrichtung zumindest teilweise überlagert.

## Revendications

1. Capuchon de protection (100) pour cartouches hydrauliques de type femelle ou mâle, adapté pour être engagé par des cartouches de type mâle et femelle, respectivement, dans lequel l'engagement mutuel d'une cartouche de type femelle et d'une cartouche de type mâle entraîne un écoulement possible de fluide hydraulique entre lesdites cartouches femelle et mâle, dans lequel ledit capuchon de protection (100) comprend une bride (1) adaptée pour être disposée dans une position fixe par rapport à ladite cartouche de type femelle ou mâle, dans lequel ladite bride (1) définit une ouverture (10) afin de permettre, dans ladite position fixe, l'engagement de ladite cartouche de type femelle ou de type mâle par une cartouche de type mâle ou de type femelle, respectivement, dans lequel ledit capuchon (100) comprend un bouchon (6) qui est commutable par rapport à ladite bride (1) entre une première position de fermeture, dans laquelle ladite ouverture (10) est obstruée par ledit bouchon (6), et une seconde position d'ouverture, dans laquelle ladite ouverture (10) n'est pas obstruée par ledit bouchon (6), dans lequel ledit bouchon (6) est adapté pour être commuté par rotation entre ladite première position de fermeture et la seconde position d'ouverture par rapport à un axe de rotation prédéterminé (R-R), **caractérisé en ce que** la commutation dudit bouchon (6) de ladite première position de fermeture à ladite seconde position d'ouverture entraîne le verrouillage automatique dudit bouchon (6) dans ladite seconde position d'ouverture, **en ce que** le déverrouillage dudit bouchon (6) entraîne la commutation automatique dudit bouchon (6) de ladite seconde position d'ouverture à ladite première position de fermeture, **en ce que** ledit capuchon de protection (100) comprend des premiers moyens élastiques (7), **en ce que** la commutation par rotation dudit bouchon (6) de ladite première position de fermeture à ladite seconde position d'ouverture se produit contre la résistance élastique desdits premiers moyens élastiques (7), **en ce que** la commutation automatique par rotation dudit bouchon (6) de ladite seconde position d'ouverture à ladite première position de fermeture est due à la poussée élastique générée par lesdits premiers moyens élastiques (7), **en ce que** le capuchon de protection (100) comprend un premier élément d'engagement et de verrouillage (200) qui est contraint en rotation à ladite bride (1), **en ce que** ledit bouchon (6) est adapté pour être commuté par rotation par rapport audit premier élément d'engagement et de verrouillage (200), **en ce que** ledit premier élément d'engagement et de verrouillage (200) est adapté pour être commuté par translation suivant une direction sensiblement parallèle audit axe de rotation (R-R) dudit bouchon (6) entre une première position et une seconde position du premier élément d'engagement et de verrouillage (200), et **en ce que** la commutation par rotation dudit bouchon (6) de ladite première position de fermeture à ladite seconde position d'ouverture du bouchon (6) entraîne la commutation automatique dudit premier élément d'engagement et de verrouillage (200) de ladite première position à ladite seconde position du premier élément d'engagement et de verrouillage (200), ledit bouchon (6) étant automatiquement verrouillé dans ladite seconde position d'ouverture du bouchon (6).

2. Capuchon de protection (100) selon la revendication 1, **caractérisé en ce que** lesdits premiers moyens élastiques (7) comprennent un premier ressort hélicoïdal, puis **en ce que** la commutation par rotation dudit bouchon (6) de ladite première position de fermeture à ladite seconde position d'ouverture du bouchon (6) se produit contre la résistance élastique de torsion dudit premier ressort hélicoïdal (7), et **en ce que** la commutation automatique par rotation dudit bouchon (6) de ladite seconde position d'ouverture à ladite première position de fermeture du bouchon (6) est due à la poussée élastique de torsion générée par ledit premier ressort hélicoïdal (7).

3. Capuchon de protection (100) selon la revendication 2, **caractérisé en ce que**, avec ledit bouchon (6) dans ladite seconde position d'ouverture, une action de pression, par exemple une action de pression manuelle, sur ledit premier élément d'engagement et de verrouillage (200) entraîne la commutation dudit premier élément d'engagement et de verrouillage (200) de ladite seconde position à ladite première position de l'élément d'engagement et de verrouillage (200) et le déverrouillage dudit bouchon (6), puis la commutation automatique par rotation dudit bouchon (6) de ladite seconde position d'ouverture à ladite première position de fermeture du bouchon (6).

4. Capuchon de protection (100) selon l'une des revendications 1 à 3, **caractérisé en ce que** ledit capuchon de protection (100) comprend des seconds moyens élastiques (9), et **en ce que** la commutation par rotation dudit bouchon (6) de ladite première position de fermeture à ladite seconde position d'ouverture du bouchon (6) entraîne la commutation automatique dudit premier élément d'engagement et de verrouillage (200) de ladite première position à ladite seconde position du premier élément d'engagement et de verrouillage (200) contre la résistance élastique desdits seconds moyens élastiques (9).

5. Capuchon de protection (100) selon la revendication 4, **caractérisé en ce que** lesdits seconds moyens élastiques (9) comprennent un second ressort hélicoïdal (9).

6. Capuchon de protection (100) selon l'une des revendications 1 à 5, **caractérisé en ce que** ledit premier élément d'engagement et de verrouillage (200) comprend une douille(8) et un insert (3) mutuellement contraints de manière que ladite douille (8) et ledit insert (3) ne soient déplaçables ni par rotation ni par translation l'un par rapport à l'autre, **en ce que** ledit insert (3) est au moins partiellement logé dans un premier siège de logement (120) de ladite bride (1), et **en ce que** ledit premier élément d'engagement et de verrouillage (200) est contraint en rotation à ladite bride (1) par l'ajustement mutuel de forme et de taille dudit insert (3) et dudit siège de logement (120).

7. Capuchon de protection (100) selon la revendication 6, **caractérisé en ce que** ledit insert (3) est façonné de manière à définir un second siège de logement (31), **en ce que** ladite douille (8) est au moins partiellement logée dans ledit second siège de logement (31), et **en ce que** ladite douille (8) et ledit insert (3) sont mutuellement contraints en rotation par l'ajustement mutuel de forme et de taille de la partie de ladite douille (8) logée dans ledit second siège d'engagement (31) et ledit second siège d'engagement (31).

8. Capuchon de protection (100) selon la revendication 7, **caractérisé en ce que** ladite bague (8) s'étend à travers ledit second siège d'engagement (31), et **en ce que** ladite bague (8) et ledit insert (3) sont mutuellement contraints en translation au moyen d'un anneau élastique (4) qui s'engage avec la partie de ladite bague (8) faisant saillie dudit insert (3).

9. Capuchon de protection (100) selon l'une des revendications de 6 à 8, **caractérisé en ce que** ladite douille (8) a une forme tubulaire creuse, et **en ce que** ledit capuchon de protection (100) comprend une vis de fixation (10) logée à l'intérieur de ladite douille (8) et au moyen de laquelle ledit premier élément d'engagement (200) peut être fixé dans une position prédéfinie.

10. Capuchon de protection (100) selon l'une des revendications de 1 à 9, **caractérisé en ce que** ledit bouchon (6) comprend une partie tubulaire creuse (60) dans laquelle est logé ledit premier élément d'engagement et de verrouillage (200).

11. Capuchon de protection (100) selon l'une des revendications de 1 à 10, **caractérisé en ce qu'**il comprend un joint (2) logé dans un siège correspondant défini par ladite bride (1).

12. Capuchon de protection (100) selon l'une des revendications de 1 à 11, **caractérisé en ce que**, avec ledit bouchon (6) dans ladite première position de fermeture, une première surface sensiblement plane dudit capuchon est au moins partiellement superposée à une seconde surface sensiblement plane de ladite bride (1) suivant une direction d'observation sensiblement parallèle audit axe de rotation (R-R).
